# EUROPÄISCHE PATENTSCHRIFT

(11) **EP 2 960 552 B1**
(45) Veröffentlichungstag und Bekanntmachung des Hinweises auf die Patenterteilung: **19.03.2025**
(21) Anmeldenummer: 15173928.1
(22) Anmeldetag: 25.06.2015
(51) Int. Cl.: F16H 63/34

(54) **PARKSPERRENBAUEINHEIT**
PARK LOCK UNIT
COMPOSANT DE FREIN DE STATIONNEMENT

(30) Priorität: 25.06.2014 DE 102014108866
(43) Veröffentlichungstag der Anmeldung: 30.12.2015
(73) Patentinhaber: Hugo Benzing GmbH & Co. KG, 70825 Korntal-Münchingen (DE)
(72) Erfinder: Kögel, Stefan, 71634 Winenden (DE); Scholpp, Udo, 70499 Stuttgart (DE)
(74) Vertreter: Fleck, Hermann-Josef

(56) Entgegenhaltungen:
- DE-A1- 102005 010 211
- DE-T2- 69 707 779

## Beschreibung

Die Erfindung bezieht sich auf eine Parksperrenbaueinheit gemäß dem Oberbegriff des Anspruchs 1.

Eine derartige Parksperrenbaueinheit dient bei Fahrzeugen mit Automatikgetriebe als mechanische Übertragungseinheit zum Einführen eines Sperrelements in ein Parksperrenrad, wenn der Schalthebel in die Parkposition gebracht wird. Eine Parksperrenbaueinheit der vorstehend genannten Art ist in der DE 697 07 779 T2 angegeben.

Auf einem gerade erstreckten, stangenartigen Aufnahmekörper ist an einem vorderen Endabschnitt ein Halteelement aufweisender Stützabschnitt zum Betätigen weiterer mechanischer Koppelglieder fest angebracht, um das Sperrelement in die gewünschte Lage zu bewegen. Der andere Endabschnitt des Aufnahmekörpers ist mit einem von dem Aufnahmekörper rechtwinklig zur Längsachse abstehenden Eingriffabschnitt versehen. Der Stützabschnitt ist über einen begrenzten Weg gegen eine Federkraft axial auf dem Aufnahmekörper verschiebbar, während der Eingriffabschnitt über entsprechend ausgebildete weitere Elemente mit dem Schalthebel gekoppelt ist. Für eine zuverlässige, exakte Betätigung der Parksperre ist eine präzise Bearbeitung mit möglichst geringen Toleranzen wesentlich.

Eine weitere Parksperrenbaueinheit zeigt die DE 10 2005 01 0211 A1. Bei dieser Parksperrenbaueinheit weist der Parksperrenmechanismus ein Sperrelement auf, welches im gesperrten Zustand eine in ein Parksperrenrad eingerastete Sperrklinke gegen ein Herausdrücken sperrt. Das Sperrelement ist auf einer Verbindungsstange angeordnet, wobei zwischen der Verbindungsstange und dem Sperrelement eine Hülse angeordnet ist, die einen Anschlag bzw. Anschlagbund aufweist, der durch eine auf der Verbindungsstange vorgesehene Federeinrichtung angefedert ist und in Richtung des der Sperrklinke zugewandten vorderen Endes der Verbindungsstange gedrückt wird. Dabei ist das auf dem Außendurchmesser der Hülse angeordnete Sperrelement nicht angefedert und nicht vorgespannt und kann sich frei drehen, um ein Klemmen des Sperrkegels bzw. des Sperrelements auf der Verbindungsstange zu verhindern.

Verschiedene weitere Ausführungen von Parksperren für Automatikgetriebe mit unterschiedlich ausgebildeten Parksperrenbaueinheiten zeigen die DE 10 2010 028 281 A1, die DE 101 44 056 A1, die US 2012/0 018 259 A1, die DE 10 2007 007 681 A1, die DE 10 2012 012 673 A1, die DE 10 2010 061 171 A1 und die 198 18 752 A1.

Der vorliegenden Erfindung liegt die Aufgabe zugrunde, eine Parksperrenbaueinheit der eingangs genannten Art bereit zu stellen, die bei möglichst einfachen Fertigungsschritten einen präzisen Aufbau und eine zuverlässige Funktion ergibt.

Diese Aufgabe wird mit den Merkmalen des Anspruchs 1 gelöst. Hierbei ist vorgesehen, dass das Halteelement in seinem hinteren Bereich fest mit dem Führungsglied verbunden ist, dass das Führungsglied hülsenförmig ausgebildet und gleitend auf dem Aufnahmekörper gelagert ist, wobei es einen Teilbereich des vorderen Endabschnitts des Aufnahmekörpers umgibt und gegen die auf dem Aufnahmekörper angeordnete Feder abgestützt ist, dass das Halteelement mittels einer mit ihrem Innenumfang an einen Außenumfang des Führungsglieds angepassten Aufnahmeöffnung auf das Führungsglied derart aufgeschoben und relativ zu dem Führungsglied unbeweglich fixiert ist, dass sich ein für eine positionsgerechte Kopplung an den Verstellmechanismus vorgegebener Abstand zwischen dem Halteelement und dem Eingriffsabschnitt ergibt, wobei das Führungsglied zwei über einen Absatz ineinander übergehende Teilabschnitte aufweist und der hintere Teilabschnitt einen im Außendurchmesser erweiterten Teilabschnitt bildet und der vordere Teilabschnitt einen Gleitabschnitt bildet, auf dem das Halteelement aufgeschoben und unbeweglich fixiert ist, und dass der erweiterte Teilabschnitt des Führungsglieds an dem vorderen Teil der Feder abgestützt ist.

Der Stützabschnitt mit dem Führungsglied ergibt vorteilhafte Herstellungsmöglichkeiten für einen präzisen Aufbau und eine zuverlässige Funktion.

Für den Aufbau und die Funktion ist dabei vorteilhaft, dass das Führungsglied hülsenförmig ausgebildet und gleitend auf dem Aufnahmekörper gelagert ist, wobei es einen Teilbereich des vorderen Endabschnitts umgibt und gegen eine auf dem Aufnahmekörper angeordnete, sich axial erstreckende Feder abgestützt ist, und dass der Stützabschnitt ein Halteelement aufweist, welches in seinem hinteren Bereich fest mit dem Führungsstück verbunden ist und in seinem vorderen Bereich mindestens ein Stützelement trägt, und genaue Justiermöglichkeiten werden dadurch erhalten, dass das Halteelement mittels einer mit ihrem Innenumfang an einen Außenumfang des Führungsglieds angepassten Aufnahmeöffnung auf das Führungsglied aufgesetzt und positionsgerecht für eine Kopplung an einen Betätigungsmechanismus fixiert ist. Mittels der Aufnahmeöffnung lässt sich das Führungsglied in einfacher Weise exakt positionieren und damit die Länge zwischen dem Eingriffabschnitt und dem Stützabschnitt genau justieren.

Zu einer zuverlässigen Funktion sind ferner die Maßnahmen von Vorteil, dass das Führungsglied zwei über einen Absatz ineinander übergehende Teilabschnitte aufweist, wobei der hintere Teilabschnitt einen im Außendurchmesser erweiterten Teilabschnitt bildet und der vordere Teilabschnitt einen Gleitabschnitt bildet, auf dem der Stützabschnitt befestigt ist. Der Absatz zwischen den beiden Teilabschnitten des Führungsglieds ergibt dabei eine zusätzliche Begrenzung für den Stützabschnitt, der bei Anpassung der Aufnahmeöffnung des Halteelements an den kleineren Außendurchmesser des vorderen Teilabschnitts höchstens bis zum Anschlag an den Absatz auf den vorderen Teilabschnitt aufgeschoben werden kann, wodurch eine zusätzliche Sicherung, zum Einrücken eines Sperrglieds in ein Parksperrenrad gegeben ist.

Weitere Vorteile für den Aufbau ergeben sich dadurch, dass der erweiterte Teilabschnitt an dem vorderen Teil der Feder abgestützt ist, welche mit ihrem hinteren Teil gegen ein an dem Aufnahmekörper fest angebrachtes hinteres Widerlager abgestützt ist.

Eine für eine exakte Herstellung vorteilhafte Maßnahme besteht des Weiteren darin, dass der Stützabschnitt an dem Führungsglied angeschweißt ist. Eine Alternative zu dieser Befestigung des Stützabschnitts an dem Führungsglied ist z. B. eine Verbindung durch Kleben. Diese Verbindungsweisen lassen eine genaue Längenjustierung der Parksperrenbaueinheit zu.

Weitere vorteilhafte Maßnahmen für die Herstellung bestehen darin, dass das Halteelement U-förmig mit einem an dem Führungsglied befestigten U-Steg und zwei davon nach vorne abgekanteten U-Schenkeln ausgebildet ist, an deren vorderem Bereich das mindestens eine Stützelement angebracht ist.

Zu einer vorteilhaften Funktion tragen auch die Maßnahmen bei, dass mindestens ein Stützelement als mindestens eine Rolle ausgebildet ist, die drehbar an dem Halteelement gelagert ist.

Zu einem vorteilhaften Aufbau und einer zuverlässigen Funktion tragen auch die Maßnahmen bei, dass das Führungsglied mittels der Federkraft in Ruhelage gegen ein an dem Aufnahmekörper in dessen vorderem Endbereich fest angebrachtes vorderes Widerlager gedrückt ist und entgegen der Federkraft begrenzt zurückschiebbar ist.

Weitere Vorteile für die Herstellung und Funktion ergeben sich dadurch, dass der Eingriffabschnitt als ein von dem Aufnahmekörper abgebogener Abschnitt ausgebildet ist.

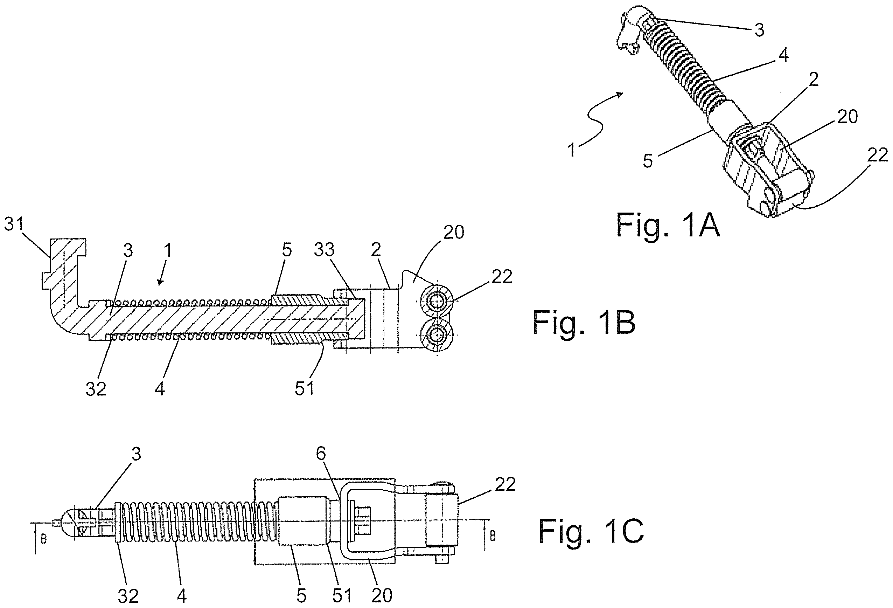

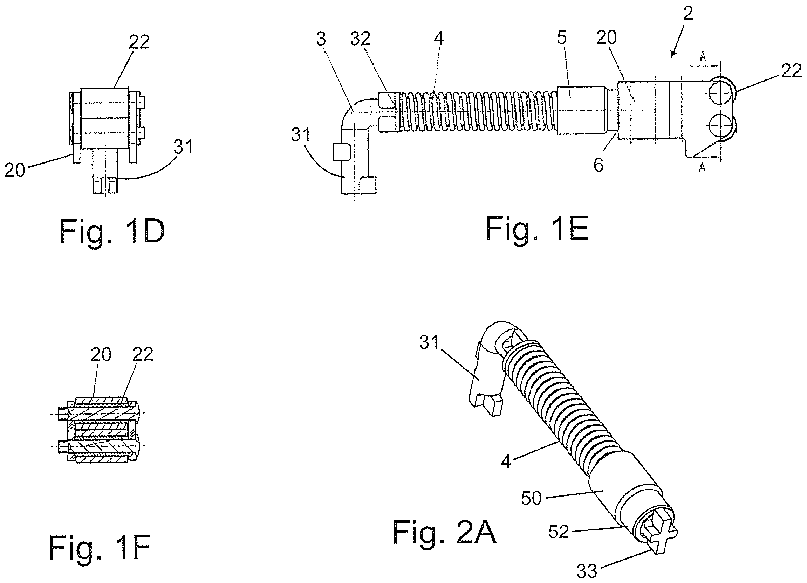

Die Erfindung wird nachfolgend anhand von Ausführungsbeispielen unter Bezugnahme auf die Zeichnungen näher erläutert. Es zeigen:
Fig. 1A bis 1F
   eine zusammengebaute Parksperrenbaueinheit in perspektivischer Ansicht, einem Längsschnitt, einer Draufsicht, einer Seitenansicht, einer Vorderansicht und einer Schnittansicht entlang einer Linie A-A in einem Stützabschnitt,
Fig. 2A, 2B und 2C
   eine perspektivische Ansicht, eine Seitenansicht und eine Vorderansicht der Parksperrenbaueinheit nach Fig. 1A bis 1F ohne Stützabschnitt und
Fig. 3A bis 3F
   den Stützabschnitt der Parksperrenbaueinheit nach den Fig. 1A bis 1F in perspektivischer Ansicht, Draufsicht, seitlicher Ansicht, Vorderansicht, rückseitiger Ansicht und in einer geschnittenen Ansicht entlang einer Linie A-A.

Die Fig. 1A zeigt eine Parksperrenbaueinheit 1 mit einem Aufnahmekörper 3, einem an dessen hinterem Endabschnitt angebrachten, seitlich abstehenden Eingriffabschnitt 31 und einem an dem vorderen Endabschnitt mittels eines Führungsglieds 5 gelagerten Stützabschnitt 2. Die Parksperrenbaueinheit 1 wird zwischen einem Verstellmechanismus, insbesondere einem manuell betätigten Schalthebel, und einem Parksperrenrad eingebaut, um in Parkstellung ein Sperrglied in das Parksperrenrad einzurücken und außerhalb der Parkstellung auszurücken.

Der Aufnahmekörper 3 ist durch eine sich längs erstreckende gerade Stange gebildet, an dessen hinterem Endabschnitt der Eingriffabschnitt 31 rechtwinklig starr angebracht, insbesondere abgebogen ist. Auf dem Aufnahmekörper 3 ist eine schraubenförmige Feder 4 koaxial angeordnet, die an ihrem hinteren Ende gegen ein fest an dem Aufnahmekörper 3 angebrachtes hinteres Widerlager 32 abgestützt ist und die mit ihrem vorderen Endabschnitt gegen das verschieblich gelagerte Führungsglied 5 abgestützt ist, welches gegen eine von der Feder 4 ausgeübte Druckkraft nach hinten verstellbar und mittels der Druckkraft in eine vordere Endlage bewegbar ist, welche durch ein an dem vorderen Endabschnitt des Aufnahmekörpers 3 fest angebrachtes vorderes Widerlager 33 bestimmt ist. Das hülsenförmig ausgebildete und koaxial auf den Aufnahmekörper 3 verschieblich aufgesetzte Führungsglied 5 stößt in der vorderen Endlage mit seiner vorderen Stirnseite gegen das vordere Widerlager 33 an, wie insbesondere aus Fig. 1B ersichtlich ist. Das vordere und das hintere Widerlager 33, 32 können z. B. mittels einer Prägung des Aufnahmekörpers 3 an diesem einstückig angeformt sein.

An einem vorderen Teilabschnitt des Führungsglieds 5 ist ein Halteelement 20 des Stützabschnitts 2 relativ zu dem Führungsglied 5 unbeweglich fixiert. Das Halteelement 20 ist in Draufsicht (axial zu dem Eingriffabschnitt 31) U-förmig ausgeführt und mit seinem U-Steg an dem vorderen Teilabschnitt des Führungsglieds 5 befestigt, während die in Draufsicht symmetrisch bezüglich der Längsachse des Aufnahmekörpers 3 vorstehenden U-Schenkel zwischen ihren vorderen Endbereichen Stützelemente in Form von zwei walzenartigen Rollen 22 tragen, deren Drehachse rechtwinklig zur Längsachse des Aufnahmekörpers 3 verläuft, wie aus den Fig. 1B, 1C, 1D und 1E ersichtlich. Über die rollenförmigen Stützelemente werden betreffende (nicht gezeigte) Koppelglieder zum Einrücken und Ausrücken eines Sperrglieds in das Parkrad betätigt.

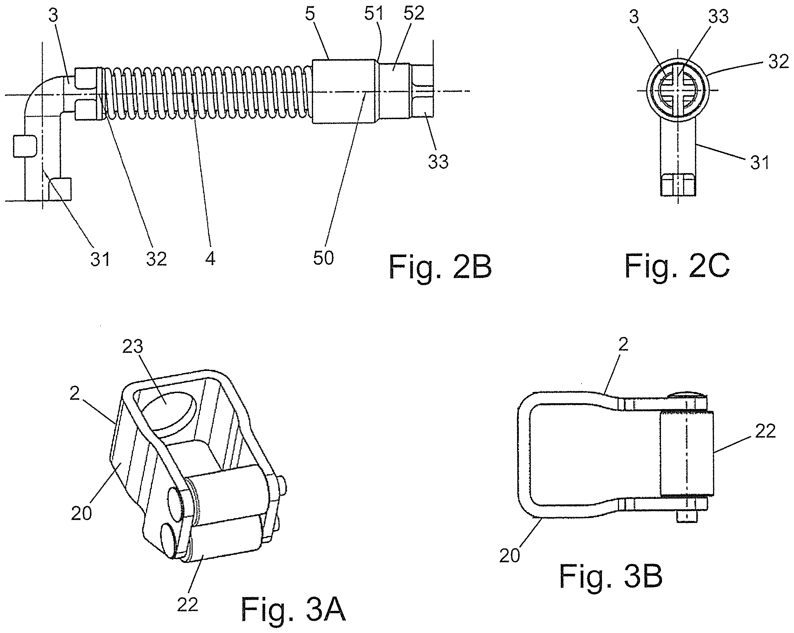

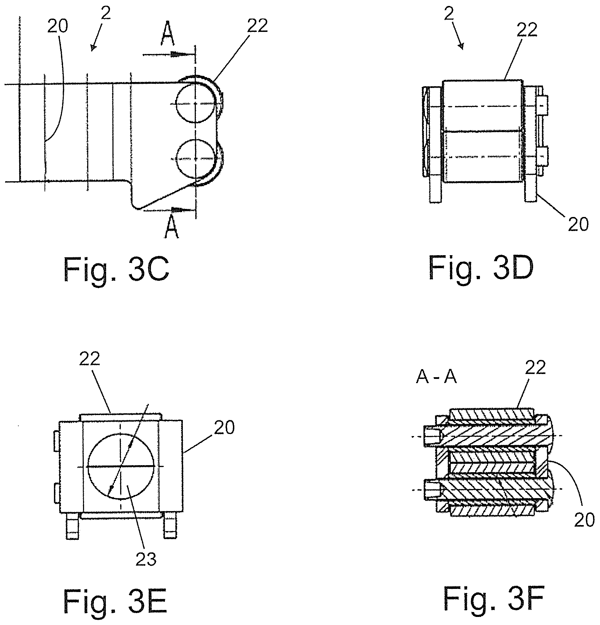

Wie aus den Fig. 1A bis 1F in Verbindung mit den Fig. 2A, 2B, 2C weiter ersichtlich, geht der vordere Teilabschnitt 52 des Führungsglieds 5 über einen Absatz 51 in einen hinteren Teilabschnitt des Führungsglieds 5 über, der als ein in seinem Außendurchmesser gegenüber dem vorderen Teilabschnitt erweiterter Teilabschnitt 50 ausgebildet und gegen den vorderen Bereich der Feder 4 abgestützt ist. Das vordere Widerlager 33, an dem die vordere Stirnseite des Führungsglieds 5 abgestützt ist, steht radial höchstens bis zum Außenumfang des vorderen Teilabschnitts 52 des Führungsglieds 5 vor. Dadurch kann das Halteelement 20, in dessen U-Steg eine Aufnahmeöffnung 23 eingebracht ist, wie die Fig. 3A und 3E zeigen, einfach auf den mit dem Führungsglied 5 und der Feder 4 vormontierten Aufnahmekörper 3 von vorne auf den vorderen Teilabschnitt 52 aufgeschoben werden, bis es einen vorgegebenen Abstand zu dem Eingriffabschnitt 31 erreicht. Dieser Abstand kann genau justiert werden, wonach das Halteelement 20 auf dem vorderen Teilabschnitt 52 z. B. durch Schweißen oder Kleben positionsgerecht fixiert wird. Die Aufnahmeöffnung 23 ist in ihrem Durchmesser vorteilhaft auf den Außendurchmesser des vorderen Teilabschnitts 52 abgestimmt, so dass auch noch dann, wenn die Fixierung mittels des Verbindungsmittels 6 brechen sollte, eine Abstützung gegen den Absatz 51 des Führungsglieds 5 erreicht und eine Stützfunktion für eine Betätigung der Parksperre gegeben ist.

Bei dem gezeigten Ausführungsbeispiel sind der Aufnahmekörper 3, das darauf verschieblich gelagerte Führungsglied 5 und die Feder 4 als koaxial zueinander angeordnete, zylinderförmige Teile ausgeführt, wodurch eine exakte Abstimmung aufeinander und zuverlässige Funktion bei einfachem Aufbau und einfacher Montage erhalten werden.

## Patentansprüche

1. Parksperrenbaueinheit geeignet für den Einbau zwischen einem Verstellmechanismus, insbesondere einem manuell betätigten Schalthebel, und einem Parksperrenrad, um in Parkstellung ein Sperrglied in das Parksperrenrad einzurücken und außerhalb der Parkstellung auszurücken,
die Parksperrenbaueinheit ist versehen
mit einem längserstreckten Aufnahmekörper (3), dessen im eingebauten Zustand von dem Parksperrenrad abgekehrter hinterer Endabschnitt mit einem quer zur Längsachse des Aufnahmekörpers (3) von diesem abstehenden, starr mit dem Aufnahmekörper (3) verbundenen Eingriffabschnitt (31) und dessen im eingebauten Zustand dem Parksperrenrad zugekehrter vorderer Endabschnitt mit einem endseitig vorstehenden, ein Halteelement (20) aufweisenden Stützabschnitt (2) versehen ist, der mittels eines Führungsgliedes (5) begrenzt gegen die Federkraft einer auf dem Aufnahmekörper (3) angeordneten, sich axial erstreckenden Feder (4) abgestützt und verschieblich auf dem Aufnahmekörper (3) gelagert ist und in seinem vorderen Bereich mindestens ein Stützelement trägt, welches geeignet ist, im Einbauzustand Koppelglieder zum Einrücken und Ausrücken des Sperrglieds in das Parksperrenrad zu betätigen,
verrwobei die Feder (4) mit ihrem hinteren Teil gegen ein an dem Aufnahmekörper (3) fest angebrachtes hinteres Widerlager (32) abgestützt ist,
**dadurch gekennzeichnet,**
**dass** das Halteelement (20) des Stützabschnitts (2) in seinem hinteren Bereich fest mit dem Führungsglied (5) verbunden ist,
**dass** das Führungsglied (5) hülsenförmig ausgebildet und gleitend auf dem Aufnahmekörper (3) gelagert ist, wobei es einen Teilbereich des vorderen Endabschnitts des Aufnahmekörpers (3) umgibt und gegen die auf dem Aufnahmekörper (3) angeordnete Feder (4) abgestützt ist,
**dass** das Halteelement (20) mittels einer mit ihrem Innenumfang an einen Außenumfang des Führungsglieds (5) angepassten Aufnahmeöffnung (23) auf das Führungsglied (5) derart aufgeschoben und relativ zu dem Führungsglied (5) unbeweglich fixiert ist, dass sich ein für eine positionsgerechte Kopplung an den Verstellmechanismus vorgegebener Abstand zwischen dem Halteelement (20) und dem Eingriffsabschnitt (31) ergibt,
wobei das Führungsglied (5) zwei über einen Absatz (51) ineinander übergehende Teilabschnitte aufweist und der hintere Teilabschnitt einen im Außendurchmesser erweiterten Teilabschnitt (50) bildet und der vordere Teilabschnitt einen Gleitabschnitt (52) bildet, auf dem das Halteelement (20) aufgeschoben und unbeweglich fixiert ist, und
**dass** der erweiterte Teilabschnitt (50) des Führungsglieds (5) an dem vorderen Teil der Feder (4) abgestützt ist.

2. Parksperrenbaueinheit nach einem der vorhergehenden Ansprüche,
**dadurch gekennzeichnet,**
**dass** das Halteelement (20) an dem Führungsglied (5) angeschweißt ist.

3. Parksperrenbaueinheit nach Anspruch 1 oder 2,
**dadurch gekennzeichnet,**
**dass** das Halteelement (20) U-förmig mit einem an dem Führungsglied (5) befestigten U-Steg und zwei davon nach vorne abgekanteten U-Schenkeln ausgebildet ist, an deren vorderem Bereich das mindestens eine Stützelement angebracht ist.

4. Parksperrenbaueinheit nach einem der vorhergehenden Ansprüche,
**dadurch gekennzeichnet,**
**dass** das mindestens eine Stützelement als mindestens eine Rolle (22) ausgebildet ist, die drehbar an dem Halteelement (20) gelagert ist.

5. Parksperrenbaueinheit nach einem der vorhergehenden Ansprüche,
**dadurch gekennzeichnet,**
**dass** das Führungsglied (5) mittels der Federkraft in Ruhelage gegen ein an dem Aufnahmekörper (3) in dessen vorderem Endbereich fest angebrachtes vorderes Widerlager (33) gedrückt ist und entgegen der Federkraft begrenzt zurückschiebbar ist.

6. Parksperrenbaueinheit nach einem der vorhergehenden Ansprüche,
**dadurch gekennzeichnet,**
**dass** der Eingriffabschnitt als ein von dem Aufnahmekörper (3) abgebogener Abschnitt ausgebildet ist.

## Claims

1. A park lock unit suitable for installation between an adjustment mechanism, in particular a manually actuated gear lever, and a park lock gear, in order to engage a locking member in the park lock gear in the parking position and to disengage it outside the parking position, the park lock unit is provided with an elongated receiving body (3), the rear end portion of which, facing away from the park lock gear in the installed state, is provided with an engagement portion (31) protruding from the receiving body (3) transversely to the longitudinal axis of the receiving body (3) and rigidly connected to the receiving body (3), and the front end portion of which, facing the park lock gear in the installed state, is provided with a support portion (2) projecting at the end and having a holding element (20), which is supported by means of a guide member (5) against the spring force of an axially extending spring (4) arranged on the receiving body (3) and is displaceably mounted on the receiving body (3) and carries at least one support element in its front region, which is suitable, in the installed state for actuating coupling elements for engaging and disengaging the locking member in the park lock gear, the spring (4) being supported with its rear part against a rear abutment (32) fixedly attached to the receiving body (3), **characterized in that**
the holding element (20) of the support portion (2) is firmly connected to the guide member (5) in its rear region,
that the guide member (5) is sleeve-shaped and is displaceably mounted on the receiving body (3), it surrounding a sub-region of the front end portion of the receiving body (3) and being supported against the spring (4) arranged on the receiving body (3),
that the holding element (20) is pushed onto the guide member (5) by means of a receiving opening (23) adapted with its inner periphery to an outer periphery of the guide member (5) and is fixed immovably relative to the guide member (5) in such a way that a distance predetermined for coupling to the adjustment mechanism in the correct position results between the holding element (20) and the engagement portion (31),
the guide member (5) having two sub-portions that merge into one another via a shoulder (51), the rear sub-portion forming a sub-portion (50) with an enlarged outer diameter and the front sub-portion forming a sliding portion (52) onto which the holding element (20) is pushed and immovably fixed, and
that the enlarged sub-portion (50) of the guide member (5) is supported on the front part of the spring (4).

2. The park lock unit according to any of the preceding claims, **characterized in that**
the holding element (20) is welded to the guide member (5).

3. The park lock unit according to either claim 1 or claim 2,
**characterized in that**
the holding element (20) is U-shaped with a U-web fastened to the guide member (5) and two U-legs bent forwards therefrom, to the front region of which the at least one support element is attached.

4. The park lock unit according to any of the preceding claims,
**characterized in that**
the at least one support element is designed as at least one roller (22) which is rotatably mounted on the holding element (20).

5. The park lock unit according to any of the preceding claims,
**characterized in that**
the guide member (5) is pressed by means of the spring force in the rest position against a front abutment (33) that is firmly attached to the receiving body (3) in its front end region and can be pushed back to a limited extent against the spring force.

6. The park lock unit according to any of the preceding claims,
**characterized in that**
the engagement portion is designed as a portion bent away from the receiving body (3).

## Revendications

1. Unité structurale de verrou de stationnement apte à être installée entre un mécanisme de réglage, en particulier un levier de changement de vitesse actionné manuellement, et une roue de verrou de stationnement, afin d'enclencher un organe de verrouillage dans la roue de verrou de stationnement dans une position de stationnement et de le désenclencher hors de la position de stationnement, l'unité structurale de verrou de stationnement est pourvue d'un corps de réception (3) allongé, dont la section d'extrémité arrière détournée de la roue de verrou de stationnement dans l'état installé est pourvue d'une section de mise en prise (31) reliée rigidement au corps de réception (3), faisant saillie à partir du corps de réception (3) transversalement à l'axe longitudinal de celui-ci, et dont la section d'extrémité avant tournée vers la roue de verrou de stationnement dans l'état installé est pourvue d'une section de support (2) dépassant du côté de l'extrémité et présentant un élément de retenue (20), laquelle section de support, à l'aide d'un organe de guidage (5), est supportée de manière limitée à l'encontre de la force de ressort d'un ressort (4) disposé sur le corps de réception (3) et s'étendant axialement, et est montée mobile sur le corps de réception (3) et soutient dans sa région avant au moins un élément de support, lequel est apte à actionner des organes d'accouplement pour l'enclenchement et le désenclenchement de l'organe de verrouillage dans la roue de verrou de stationnement dans l'état installé, le ressort (4) étant supporté par sa partie arrière contre une butée (32) arrière attachée fixement au corps de réception (3), **caractérisée en ce que**
l'élément de retenue (20) de la section de support (2) est relié fixement à l'organe de guidage (5) dans sa région arrière,
que l'organe de guidage (5) est réalisé en forme de manchon et est monté de manière à glisser sur le corps de réception (3), ledit organe de guidage entourant une région partielle de la section d'extrémité avant du corps de réception (3) et étant supporté contre le ressort (4) disposé sur le corps de réception (3),
que l'élément de retenue (20) est enfilé sur l'organe de guidage (5) à l'aide d'une ouverture de réception (23) adaptée par sa périphérie intérieure à une périphérie extérieure de l'organe de guidage (5) et est fixé de manière immobile par rapport à l'organe de guidage (5) de telle sorte qu'il en résulte, entre l'élément de retenue (20) et la section de mise en prise (31), une distance pré-définie pour un accouplement en position correcte au mécanisme de réglage,
l'organe de guidage (5) présentant deux sections partielles se prolongeant l'une dans l'autre par l'intermédiaire d'un épaulement (51) et la section partielle arrière formant une section partielle (50) agrandie en diamètre extérieur et la section partielle avant formant une section de glissement (52) sur laquelle l'élément de retenue (20) est enfilé et fixé de manière immobile, et
que la section partielle (50) agrandie de l'organe de guidage (5) est supportée sur la partie avant du ressort (4).

2. Unité structurale de verrou de stationnement selon l'une des revendications précédentes, **caractérisée en ce que**
l'élément de retenue (20) est soudé sur l'organe de guidage (5).

3. Unité structurale de verrou de stationnement selon la revendication 1 ou 2, **caractérisée en ce que**
l'élément de retenue (20) est réalisé en forme de U avec une âme de U fixée à l'organe de guidage (5) et deux branches de U pliées vers l'avant à partir de celle-ci, branches à la région avant desquelles l'au moins un élément de support est attaché.

4. Unité structurale de verrou de stationnement selon l'une des revendications précédentes,
**caractérisée en ce que**
l'au moins un élément de support est réalisé sous la forme d'au moins un rouleau (22) qui est monté de manière à pouvoir tourner sur l'élément de retenue (20).

5. Unité structurale de verrou de stationnement selon l'une des revendications précédentes,
**caractérisée en ce que**
l'organe de guidage (5) est pressé à l'aide de la force de ressort dans une position de repos contre une butée (33) avant attachée fixement dans sa région d'extrémité avant au corps de réception (3) et peut être repoussé de manière limitée à l'encontre de la force de ressort.

6. Unité structurale de verrou de stationnement selon l'une des revendications précédentes,
**caractérisée en ce que**
la section de mise en prise est réalisée sous la forme d'une section courbée à partir du corps de réception (3).
